(19) Europäisches Patentamt
European Patent Office
Office européen des brevets

(11) EP 4 322 260 A1

(12) EUROPEAN PATENT APPLICATION
published in accordance with Art. 153(4) EPC

(43) Date of publication:
14.02.2024 Bulletin 2024/07

(51) International Patent Classification (IPC):
*H01M 4/505* (2010.01)

(21) Application number: 22936053.2

(86) International application number:
PCT/CN2022/101168

(22) Date of filing: 24.06.2022

(87) International publication number:
WO 2023/245632 (28.12.2023 Gazette 2023/52)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Contemporary Amperex Technology
Co., Limited
Ningde City, Fujian 352100 (CN)

• LIANG, Zibin
Ningde City, Fujian 352100 (CN)
• WANG, Yuhao
Ningde City, Fujian 352100 (CN)
• LI, Qiang
Ningde City, Fujian 352100 (CN)
• LIN, Wenguang
Ningde City, Fujian 352100 (CN)
• ZHANG, Xinxin
Ningde City, Fujian 352100 (CN)
• HE, Jinhua
Ningde City, Fujian 352100 (CN)

(72) Inventors:
• HE, Shunli
Ningde City, Fujian 352100 (CN)

(74) Representative: Kraus & Lederer PartGmbB
Thomas-Wimmer-Ring 15
80539 München (DE)

(54) **ELECTRODE ACTIVE MATERIAL, SECONDARY BATTERY, AND ELECTRICAL DEVICE**

(57) This application provides an electrode active material including a layered metal oxide. The layered metal oxide has the following general formula: $Na_xM1_aM2_bMn_{1-a-b}O_{2-z}F_z$; where $0.55 \leq x \leq 0.85$, $a \geq 0$, $b \geq 0$, $0.1 \leq a + b \leq 0.33$, and $0.06 \leq z/(1 - a - b) \leq$ 0.13; M1 is selected from one or more of alkali metal elements other than Na and alkaline earth metal elements; and M2 is selected from one or more of transition metal elements other than Mn.

FIG. 1

**Description**

**TECHNICAL FIELD**

This application relates to the field of battery technologies, and in particular, to an electrode active material, a secondary battery, and an electric apparatus.

**BACKGROUND**

In recent years, as secondary batteries are increasingly widely used, secondary batteries are widely used in energy storage power supply systems such as hydroelectric power plants, thermal power plants, wind power plants, and solar power plants, and many other fields including electric tools, electric bicycles, electric motorcycles, electric vehicles, military equipment, and aerospace. Due to great development of the secondary batteries, higher requirements are imposed on energy density, cycling performance, and the like of the secondary batteries.

Layered metal oxides are considered as one of the promising positive electrode materials for sodium-ion batteries mainly due to their simple preparation, high specific capacity, and high ionic conductivity. At present, according to different occupation modes of sodium ions between transition metal layers and stacking modes of oxygen layers of the transition metal layers, the structures of these layered metal oxides can be mainly categorized into P2-type and O3-type. In P2-type and O3-type layered transition metal oxides, a single sodium ion occupies prismatic (P) and octahedral (O) positions in an interlayer.

In the prior art, positive electrode materials with better performance are required for sodium-ion batteries.

**SUMMARY**

In view of the foregoing issues, this application provides a new electrode active material, a secondary battery, and an electric apparatus, which are described separately below.

According to a first aspect, this application provides an electrode active material including a layered metal oxide, where the layered metal oxide has the following general formula:

$$Na_x M1_a M2_b Mn_{1-a-b} O_{2-z} F_z,$$

where $0.55 \leq x \leq 0.85$, $a \geq 0$, $b \geq 0$, $0.1 \leq a + b \leq 0.33$, and $0.06 \leq z/(1 - a - b) \leq 0.13$;
M1 is selected from one or more of alkali metal elements other than Na and alkaline earth metal elements; and
M2 is selected from one or more of transition metal elements other than Mn.

The electrode active material in the foregoing solution has enhanced phase structure stability. The electrode active material based on the foregoing solution has enhanced phase structure stability, and such electrode active material is used in a secondary battery, so the secondary battery shows one or more of the following advantages: increased discharge voltage, increased discharge specific capacity, and improved cycling performance.

In some embodiments, the layered metal oxide is a P2-type layered metal oxide. The electrode active material based on the foregoing solution has enhanced phase structure stability, and such electrode active material is used in a secondary battery, so the secondary battery shows increased discharge voltage, increased specific capacity, and/or increased cycling retention rate.

In some embodiments, the electrode active material has one or more of the following characteristics:

- the alkali metal element is selected from Li, K, or a combination thereof;
- the alkaline earth metal element is selected from Be, Mg, Ca, Sr, Ba, or a combination thereof; and
- the transition metal element is selected from Ni, Fe, Ti, V, Cr, Co, Cu, Zn, or a combination thereof.

The electrode active material based on the foregoing solution has enhanced phase structure stability, and such electrode active material is used in a secondary battery, so the secondary battery shows increased discharge voltage, increased specific capacity, and/or increased cycling retention rate.

In some embodiments, the electrode active material has one or more of the following characteristics:

- the alkali metal element is Li;
- the alkaline earth metal element is Mg; and
- the transition metal element is selected from Ni, Fe, Zn, or a combination thereof.

The electrode active material based on the foregoing solution has enhanced phase structure stability, and such electrode active material is used in a secondary battery, so the secondary battery shows increased discharge voltage, increased specific capacity, and/or increased cycling retention rate.

In some embodiments, the electrode active material has one or more of the following characteristics:

$$(1)\ 0.65 \leq x \leq 0.75;$$

and

$$(2)\ 0.06 \leq z/(1 - a - b) \leq 0.08.$$

The electrode active material based on the foregoing solution has enhanced phase structure stability, and such electrode active material is used in a secondary battery, so the secondary battery shows increased discharge voltage, increased specific capacity, and/or increased cycling retention rate.

In some embodiments, $0.25 \leq (a + b)/(1 - a - b) \leq 0.43$. The electrode active material based on the foregoing solution has enhanced phase structure stability, and such electrode active material is used in a secondary battery, so the secondary battery shows increased discharge voltage, increased specific capacity, and/or increased cycling retention rate.

In some embodiments, in the electrode active material, in an X-ray diffraction pattern of the layered metal oxide, an intensity corresponding to a (002) crystal plane characteristic peak satisfies the following relation:

$$I/I_0 \geq 0.8;$$

where

$I_0$ is an intensity corresponding to a (002) crystal plane characteristic peak of a layered metal oxide not soaked in water; and
I is an intensity corresponding to a (002) crystal plane characteristic peak of a layered metal oxide soaked in water for 24 hours.

The electrode active material based on the foregoing solution has enhanced phase structure stability, and such electrode active material is used in a secondary battery, so the secondary battery shows increased discharge voltage, increased specific capacity, and/or increased cycling retention rate.

In some embodiments, the electrode active material includes:

a core, where the core includes the layered metal oxide; and
a shell, where the shell covers at least a portion of surface of the core, the shell includes a first element A, and the first element A is selected from Ti, Al, Mg, Co, or a combination thereof; and
the electrode active material has the following general formula:

$$Na_x M1_a M2_b Mn_{1 - a - b} O_{2 - z} F_z \cdot A_n,$$

where n > 0.

The electrode active material based on the foregoing solution has enhanced phase structure stability, and such electrode active material is used in a secondary battery, so the secondary battery shows increased discharge voltage, increased specific capacity, and/or increased cycling retention rate.

In some embodiments, the electrode active material satisfies the following relation: $0 < n \leq 0.0006/z$. The electrode active material based on the foregoing solution has enhanced phase structure stability, and such electrode active material is used in a secondary battery, so the secondary battery shows increased discharge voltage, increased specific capacity, and/or increased cycling retention rate.

According to a second aspect, this application provides a secondary battery including a positive electrode, where the positive electrode includes the foregoing electrode active material.

According to a third aspect, this application provides an electric apparatus including the foregoing secondary battery.

Beneficial effects

One or more embodiments of this application have one or more of the following beneficial effects.

(1) The layered metal oxide of this application has enhanced phase structure stability, and therefore can maintain a stable phase structure in aqueous and atmospheric environments.
(2) The electrode active material of this application is used in a secondary battery, and therefore the secondary battery has increased discharge voltage.
(3) The electrode active material of this application is used in a secondary battery, and therefore the secondary battery has increased specific capacity.
(4) The electrode active material of this application is used in a secondary battery, and therefore the secondary battery has enhanced cycling stability.

**BRIEF DESCRIPTION OF DRAWINGS**

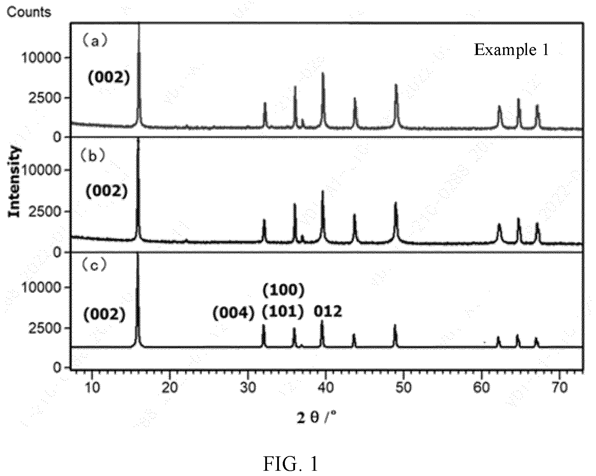

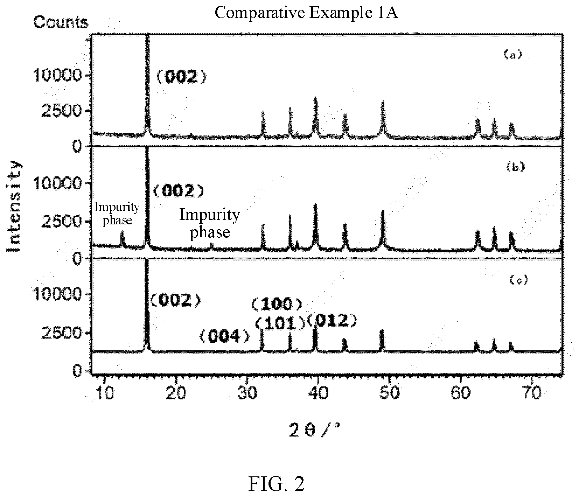

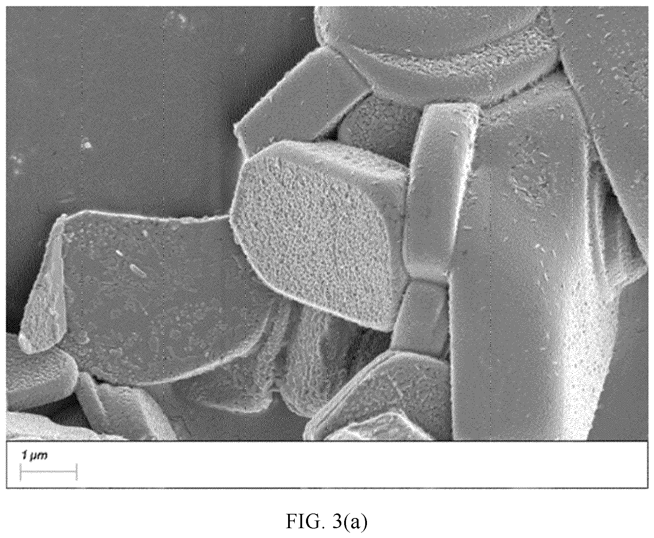

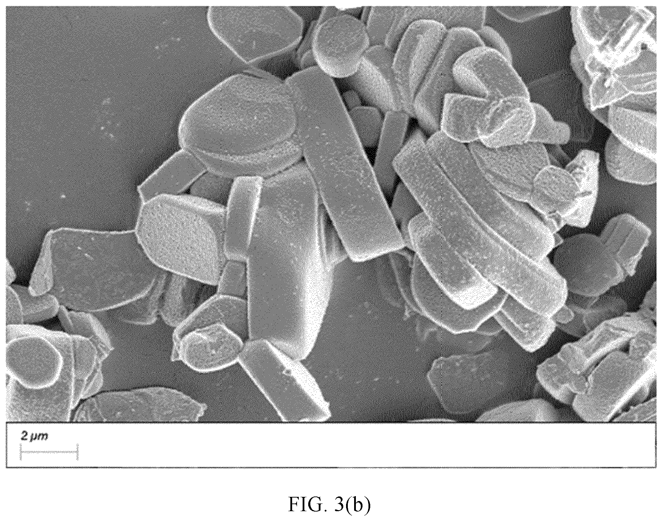

(a), (b), and (c) of FIG. 1 show XRD patterns of a fresh prepared layered metal oxide and a washed layered metal oxide in Example 1 and a standard phase card (00-054-0894) respectively.
(a), (b), and (c) of FIG. 2 show XRD patterns of a fresh prepared layered metal oxide and a washed layered metal oxide in Comparative Example 1A and a standard phase card (00-054-0894).
(a) and (b) of FIG. 3 show scanning electron microscope images of the layered metal oxide in Example 1 at different magnifications respectively.
In FIG. 4, (a) shows a discharge specific capacity curve of the layered metal oxide in Example 1; and (b) shows a discharge specific capacity curve of the layered metal oxide in Comparative Example 1A.
FIG. 5 is a schematic diagram of a secondary battery according to an embodiment of this application.
FIG. 6 is an exploded view of the secondary battery according to the embodiment of this application in FIG. 5.
FIG. 7 is a schematic diagram of a battery module according to an embodiment of this application.
FIG. 8 is a schematic diagram of a battery pack according to an embodiment of this application.
FIG. 9 is an exploded view of the battery pack according to the embodiment of this application in FIG. 8.
FIG. 10 is a schematic diagram of an electric apparatus using a secondary battery as a power source according to an embodiment of this application.

Description of reference signs:
1. battery pack; 2. upper box body; 3. lower box body; 4. battery module; 5. secondary battery; 51. housing; 52. electrode assembly; and 53. top cover assembly.

**DESCRIPTION OF EMBODIMENTS**

The following specifically discloses embodiments of a negative electrode active material and a manufacturing method thereof, a positive electrode plate, a negative electrode plate, a secondary battery, a battery module, a battery pack, and an apparatus in this application with appropriate reference to detailed descriptions of accompanying drawings. However, there may be cases where unnecessary detailed descriptions are omitted. For example, detailed descriptions of well-known matters and repeated descriptions of actually identical structures have been omitted. This is to avoid unnecessarily prolonging the following descriptions, for ease of understanding by persons skilled in the art. In addition, the accompanying drawings and the following descriptions are provided for persons skilled in the art to fully understand this application and are not intended to limit the subject matter recorded in the claims.
"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A orB": A is true (or present) and B is false (or not present); A is false (or not present) and B is true (or present); or both A and B are true (or present).

[Secondary battery]

Secondary batteries, also referred to as rechargeable batteries or storage batteries, are batteries whose active material can be activated for continuous use through charging after the batteries are discharged.

Generally, a secondary battery includes a positive electrode plate, a negative electrode plate, a separator, and an electrolyte. During charging and discharging of the battery, active ions (for example, sodium ions) are intercalated and deintercalated between the positive electrode plate and the negative electrode plate. The separator is disposed between the positive electrode plate and the negative electrode plate to mainly prevent short circuit between positive and negative electrodes and to allow the active ions to pass through. The electrolyte is between the positive electrode plate and the negative electrode plate to mainly conduct the active ions.

The secondary battery is, for example, a sodium-ion battery. Composition of the sodium-ion battery mainly includes a positive electrode, a negative electrode, a separator, and an electrolyte. The positive and negative electrodes are separated by the separator to prevent short circuit, and the electrolyte infiltrates the positive and negative electrodes to ensure ion conduction. During charging, $Na^+$ is deintercalated from the positive electrode and intercalated into the negative electrode through the separator via the electrolyte, such that the positive electrode is in a sodium-poor state at a high potential and the negative electrode is in a sodium-rich state at a low potential. During discharging, the process is reversed. $Na^+$ is deintercalated from the negative electrode and intercalated into the positive electrode material through the separator via the electrolyte, such that the positive electrode is restored to the sodium-rich state. To maintain charge balance, electrons are transferred through an external circuit in a same count during charging and discharging, and migrate between the positive and negative electrodes together with $Na^+$, such that oxidation and reduction reactions occur at the positive and negative electrodes. The sodium ions can reversibly migrate between the positive and negative electrodes in the electrolyte, and both the positive and negative electrodes are made of insert-type materials that allow reversible intercalation and deintercalation of the sodium ions.

[Negative electrode plate]

The negative electrode plate includes a negative electrode current collector and a negative electrode film layer disposed on at least one surface of the negative electrode current collector, where the negative electrode film layer includes a negative electrode active material, and the negative electrode active material is the negative electrode active material according to any one of the embodiments of this application.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, a copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a negative electrode active material for batteries well-known in the art. For example, the negative electrode active material may include: at least one of the following materials: hard carbon, heteroatom-doped carbon, metal oxide, and metal sulfide, where these materials are used as the negative electrode material of the sodium-ion battery and show long cycle life, but low sodium storage capacity and energy density limit their application; and a phosphorus-based material, including elemental phosphorus (P) and metal phosphide ($M_xP_y$, where M = Fe, Co, Ni, Cu, Sn, Mo, or the like). However, this application is not limited to these materials, but may use other conventional materials that can be used as negative electrode active materials for batteries instead. One of these negative electrode active materials may be used alone, or two or more of them may be used in combination.

In some embodiments, the negative electrode film layer further optionally includes a binder. For example, the binder may be selected from at least one of styrenebutadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. For example, the conductive agent may be selected from at least one of superconducting carbon, acetylene black, carbon black, Ketjen black, carbon dots, carbon nanotubes, graphene, and carbon nanofiber.

In some embodiments, the negative electrode film layer further optionally includes other additives such as a thickener (for example, sodium carboxymethyl cellulose (CMC-Na)).

In some embodiments, the negative electrode plate may be prepared in the following manner: the constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

[Positive electrode plate]

In some embodiments, the positive electrode plate typically includes a positive electrode current collector and a positive electrode film layer disposed on at least one surface of the positive electrode current collector, where the positive electrode film layer includes a positive electrode active material.

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

[Positive electrode active material]

According to a first aspect, this application provides an electrode active material including a layered metal oxide, where the layered metal oxide has the following general formula:

$$Na_xM1_aM2_bMn_{1-a-b}O_{2-z}F_z,$$

where $0.55 \leq x \leq 0.85$, $a \geq 0$, $b \geq 0$, $0.1 \leq a + b \leq 0.33$, and $0.06 \leq z/(1 - a - b) \leq 0.13$;
M1 is selected from one or more of alkali metal elements other than Na and alkaline earth metal elements; and
M2 is selected from one or more of transition metal elements other than Mn.

The electrode active material in the foregoing solution has enhanced phase structure stability. The electrode active material based on the foregoing solution has enhanced phase structure stability, and such electrode active material is used in a secondary battery, so the secondary battery shows one or more of the following advantages: increased discharge voltage, increased discharge specific capacity, and improved cycling performance.

Without being bound by any theory, $0.06 \leq z/(1 - a - b) \leq 0.13$ is critical to stability and electrochemical performance of the material. When $z/(1 - a - b)$ is within the foregoing range, the material has the following advantages.

(1) The material has enhanced phase structure stability of the material. The material can maintain a stable phase structure in aqueous and atmospheric environments. This characteristic advantageously maintains structural stability in the process of applying a material to prepare an electrode plate (aqueous environment) and in the process of atmospheric storage (atmospheric environment).
(2) The material has high specific capacity.
(3) F doping can effectively enhance ionic bonding strength and structural stability of the material, thereby improving phase transition reversibility and cyclic reversibility of the material at high pressure. Therefore, the material has more excellent cycling performance.
(4) $z/(1 - a - b)$ represents a specific ratio of F/Mn. This specific ratio can suppress ordered arrangement of M1, M2, and $Mn^{4+}$, and stabilize valence change of Mn at low voltage, such that valence changes of active transition metals such as Fe and Ni at higher voltage are clearly distinguished from the valence change of Mn at low voltage during charging, thereby increasing overall utilization of M2 active transition metal elements such as Fe and Ni by the material, and increasing discharge mid-voltage of the material.
(5) Due to the high discharge mid-voltage of the material, cycling problems caused by the Jahn-Teller effect of the valence change of Mn at low voltage can be suppressed by shortening the voltage window, thereby increasing energy density of the material and improving cycling performance of the material.

When the ratio of element F to element Mn is excessively low, a proportion of Mn-O is much higher than a proportion of Mn-F, slightly alleviating a series of problems of poor stability in aqueous and atmospheric environments caused by Mn-O. In addition, a very low proportion of F/Mn doping is insufficient to disrupt the ordered structure between the transition metals and $Mn^{4+}$, to suppress two-phase transition in the low-voltage region, and to make the valence change of Mn occurs below 2 V, thus leading to the disadvantage of cycling attenuation caused by the Jahn-Teller distortion during cycling at 2 V-4.5 V

When the ratio of element F to element Mn is excessively high, F is largely distributed on the surface of the structure due to high electronegativity and uncontrollably forms many complex fluorinated layers on the surface, resulting in that it is difficult for the majority of Na ions to be deintercalated from the material during charging. In other words, an excessively low charge capacity leads to a low discharge capacity of the fully charged battery, and thus an excessively low energy density.

In some embodiments, the layered metal oxide is a P2-type layered metal oxide.

In some embodiments, in the P2-type layered metal oxide, one transition metal element (Me) and six surrounding oxygen atoms form a MeOe octahedron, and the MeOe octahedrons constitute transition metal layers through edge sharing. The sodium ions are located between the transition metal layers and occupy the prismatic (prismatic) positions between the MeOe interlayers. In the P2 structure, the sodium ions occupy two types of prismatic (prismatic) positions between the MeOe interlayers. One type is that both upper and lower sides of the prismatic are connected to the transition metal MeOe octahedrons through edge sharing, and the other type is that the prismatic is connected to the transition metal MeOe octahedrons through face sharing.

In some embodiments, the P2-type layered metal oxide belongs to the hexagonal crystal system in the space group P63/mmc.

In some embodiments, the alkali metal element is selected from Li, K, or a combination thereof. The electrode active material based on the foregoing solution has enhanced phase structure stability, and such electrode active material is used in a secondary battery, so the secondary battery shows increased discharge voltage, increased specific capacity, and/or increased cycling retention rate.

In some embodiments, the term "alkaline earth metal" refers to elements in group 2 of the periodic table of chemical elements (IUPAC).

In some embodiments, the alkaline earth metal element is selected from Be, Mg, Ca, Sr, Ba, or a combination thereof. The electrode active material based on the foregoing solution has enhanced phase structure stability, and such electrode active material is used in a secondary battery, so the secondary battery shows increased discharge voltage, increased specific capacity, and/or increased cycling retention rate.

In some embodiments, the term transition metal refers to elements in groups 3 to 12 of the periodic table of chemical elements (IUPAC).

In some embodiments, the transition metals other than Mn are selected from Ni, Fe, Ti, Cr, Co, Cu, Zn, or a combination thereof. The electrode active material based on the foregoing solution has enhanced phase structure stability, and such electrode active material is used in a secondary battery, so the secondary battery shows increased discharge voltage, increased specific capacity, and/or increased cycling retention rate.

In some embodiments, the alkali metal element is Li. The electrode active material based on the foregoing solution has enhanced phase structure stability, and such electrode active material is used in a secondary battery, so the secondary battery shows increased discharge voltage, increased specific capacity, and/or increased cycling retention rate.

In some embodiments, the alkaline earth metal element is Mg. The electrode active material based on the foregoing solution has enhanced phase structure stability, and such electrode active material is used in a secondary battery, so the secondary battery shows increased discharge voltage, increased specific capacity, and/or increased cycling retention rate.

In some embodiments, the transition metal element is selected from Ni, Fe, Zn, or a combination thereof. The electrode active material based on the foregoing solution has enhanced phase structure stability, and such electrode active material is used in a secondary battery, so the secondary battery shows increased discharge voltage, increased specific capacity, and/or increased cycling retention rate.

In some embodiments, $0.06 \leq z/(1 - a - b) < 0.07$, $0.07 \leq z/(1 - a - b) < 0.08$, $0.08 \leq z/(1 - a - b) \leq 0.09$, $0.09 \leq z/(1 - a - b) \leq 0.1$, $0.01 \leq z/(1 - a - b) \leq 0.11$, $0.11 \leq z/(1 - a - b) \leq 0.12$, or $0.12 \leq z/(1 - a - b) \leq 0.13$.

In some embodiments, the value of x is 0.55-0.6, 0.6-0.65, 0.65-0.7, 0.7-0.75, 0.75-0.8, or 0.8-0.85.

In some embodiments, the value of a is 0, 0-0.05, 0.05-0.1, 0.1-0.15, 0.15-0.2, 0.2-0.25, 0.25-0.3, or 0.3-0.33.

In some embodiments, the value of b is 0, 0-0.05, 0.05-0.1, 0.1-0.15, 0.15-0.2, 0.2-0.25, 0.25-0.3, or 0.3-0.33.

In some embodiments, a and b are not both 0.

In some embodiments, the value of a + b is 0.1-0.15, 0.15-0.2, 0.2-0.25, 0.25-0.3, or 0.3-0.33.

In some embodiments, $0.65 \leq x \leq 0.75$. The electrode active material based on the foregoing solution has enhanced phase structure stability, and such electrode active material is used in a secondary battery, so the secondary battery shows increased discharge voltage, increased specific capacity, and/or increased cycling retention rate.

In some embodiments, $0.06 \leq z/(1 - a - b) \leq 0.08$. The electrode active material based on the foregoing solution has enhanced phase structure stability, and such electrode active material is used in a secondary battery, so the secondary battery shows increased discharge voltage, increased specific capacity, and/or increased cycling retention rate.

In some embodiments, $0.25 \leq (a + b)/(1 - a - b) \leq 0.43$. The content ratio (M1 + M2)/Mn is the main factor affecting trivalent Mn and tetravalent Mn and an actual content of sodium in the structure. When the Na content is determined, the valence state composition of Mn depends on the content of (M1 + M2), where trivalent Mn is a charge compensation element that provides low voltage (below 2 V), and the Jahn-Teller effect that easily occurs at low voltage tends to be the main factor causing cycling attenuation; and M1 or M2 is the main element that provides (above 2 V) charge compensation and affects the structural type of the material, playing a major role in ultimate overall capacity and average voltage of the material. If the content ratio (M1 + M2)/Mn is excessively low, (a + b)/(1 - a - b) < 0.25. Mn is the main element that provides charge compensation and provides high capacity, and excessive contribution of trivalent Mn is prone to cause the Jahn-Teller distortion. If the content ratio (M1 + M2)/Mn is excessively high, (a + b)/(1 - a - b) > 0.43. The structure in which Mn is the central atomic framework of the transition metal layer has a very low proportion, and the possibility of F doping to construct Mn-F bonds is greatly reduced, resulting in a greatly reduced benefit of stabilizing the structure by F doping. Therefore, the electrode active material based on the foregoing solution has enhanced phase structure stability, and such electrode active material is used in a secondary battery, so the secondary battery shows increased discharge voltage, increased specific capacity, and/or increased cycling retention rate.

In some embodiments, the value of (a + b)/(1 - a - b) is 0.25-0.3, 0.3-0.35, 0.35-0.4, or 0.4-0.43.

In some embodiments, in the electrode active material, in an X-ray diffraction pattern of the layered metal oxide, an intensity corresponding to a (002) crystal plane characteristic peak satisfies the following relation:

$$I/I_0 \geq 0.8;$$

where

$I_0$ is an intensity corresponding to a (002) crystal plane characteristic peak of a layered metal oxide not soaked in water; and
I is an intensity corresponding to a (002) crystal plane characteristic peak of a layered metal oxide soaked in water for 24 hours.

In this application, both the (002) crystal plane characteristic peak of the layered oxide of the positive electrode active material and its intensity have meanings well known in the art. The X-ray diffraction pattern can be determined by using an X-ray powder diffractometer in accordance with JIS K0131-1996 General Rules for X-ray Diffraction Analysis, and then the (002) crystal plane characteristic peak is obtained and its peak height is measured, which is the intensity corresponding to the (002) crystal plane characteristic peak. For example, a Bruker D8 Discover X-ray powder diffractometer from Bruker AxS of Germany is used, with a CuKα ray as the radiation source and a ray wavelength of $\lambda = 1.5406$ Å.

In some embodiments, measurement conditions for the powder XRD diffraction pattern have one or more of the following characteristics:

(1) median particle size by volume of a powder sample: 5 μm-15 μm;
(2) radiation source: CuK ray;
(3) scanning mode: step scanning;
(4) scanning condition: 0.01°/step-0.05°/step; and
(5) entrance slit: 1 mm-5 mm, anti-scatter slit: 10 mm-20 mm, and receiving slit: 0.1 mm-1 mm.

In some embodiments, $0.8 \leq I/I_0 \leq 1$.

In some embodiments, $0.9 \leq I/I_0 \leq 1$.

In some embodiments, the electrode active material includes:

a core, where the core includes the layered metal oxide; and
a shell, where the shell covers at least a portion of surface of the core, the shell includes a first element A, and the first element A is selected from Ti, Al, Mg, Co, or a combination thereof; and
the electrode active material has the following general formula:

$$Na_x M1_a M2_b Mn_{1-a-b} O_{2-z} F_z \cdot A_n,$$

where n > 0.

The electrode active material based on the foregoing solution has enhanced phase structure stability, and such electrode active material is used in a secondary battery, so the secondary battery shows increased discharge voltage, increased specific capacity, and/or increased cycling retention rate.

In the foregoing embodiments, the first element A is present in the shell in the form of an oxide including only element A or in the form of a composite oxide including both Na and element A.

In the foregoing embodiments, the subscript n of the first element A indicates a molar proportion of the first element A in $Na_x M1_a M2_b Mn_{1-a-b} O_{2-z} F_z \cdot A_n$.

In some embodiments, the electrode active material satisfies the following relation:

$$0 < n \leq 0.0006/z.$$

The electrode active material based on the foregoing solution has enhanced phase structure stability, and such electrode active material is used in a secondary battery, so the secondary battery shows increased discharge voltage, increased specific capacity, and/or increased cycling retention rate.

In some embodiments, the electrode active material is a powder material. A median particle size by volume of the powder is 0.5 μm-15 μm, for example, 0.5 μm-1 μm, 1 μm-1.5 μm, 1.5 μm-2 μm, 2 μm-2.5 μm, 2.5 μm-3 μm, 3 μm-3.5 μm, 3.5 μm-4 μm, 4 μm-4.5 μm, 4.5 μm-5 μm, 5 μm-7 μm, 7 μm-9 μm, 9 μm-11 μm, 11 μm-13 μm, or 13 μm-15 μm.

In this application, the median particle size by volume of the layered oxide positive electrode active material has a meaning well known in the art and can be measured by using an instrument and a method well known in the art. For example, the median particle size by volume can be easily measured in accordance with GB/T 19077-2016 particle size distribution laser diffraction method by using a laser particle size analyzer, for example, a laser particle size analyzer of Mastersizer 2000E from Malvern Instruments Ltd. of UK.

According to a second aspect, this application provides a secondary battery including a positive electrode, where the positive electrode includes the foregoing electrode active material. The secondary battery is, for example, a sodium-ion battery.

According to a third aspect, this application provides an electric apparatus including the foregoing secondary battery.

[Electrolyte]

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.
In some embodiments, the electrolyte is liquid and includes an electrolytic salt and a solvent.
In some embodiments, the electrolytic salt is selected from sodium perchlorate, sodium hexafluorophosphate, sodium tetrafluoroborate, and sodium hexafluoroarsenate.
In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.
In some embodiments, the electrolyte further optionally includes an additive. For example, the additive may include a negative electrode film-forming additive or a positive electrode film-forming additive, or may include an additive capable of improving some performance of the battery, for example, an additive for improving overcharge performance of the battery, or an additive for improving high-temperature or low-temperature performance of the battery.

[Separator]

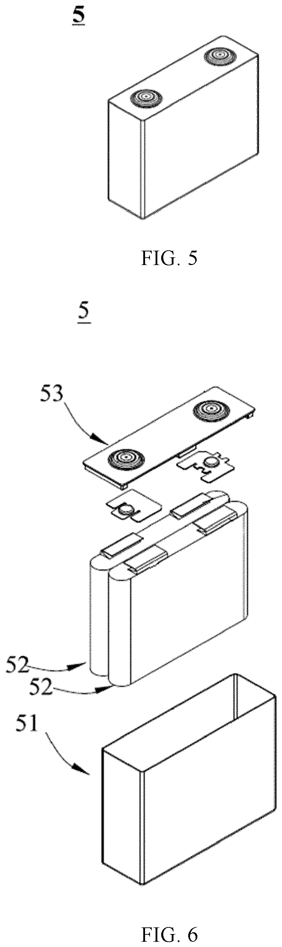

In some embodiments, the secondary battery further includes a separator. The separator is not limited to any particular type in this application, and may be any well-known porous separator with good chemical stability and mechanical stability.
In some embodiments, a material of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of the same or different materials, which is not particularly limited.
In some embodiments, the positive electrode plate, the negative electrode plate, and the separator may be made into an electrode assembly through winding or lamination.
In some embodiments, the secondary battery may include an outer package. The outer package may be used for packaging the electrode assembly and the electrolyte.
In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic. Polypropylene, polybutylene terephthalate, polybutylene succinate, and the like may be listed as the plastic.
Shape of the secondary battery is not particularly limited in this application, and the secondary battery may be cylindrical, rectangular, or of any other shapes. For example, FIG. 5 shows a rectangular secondary battery 5 as an example.
In some embodiments, referring to FIG. 6, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. There may be one or more electrode assemblies 52 in the secondary battery 5, and persons skilled in the art may make choices according to actual requirements.
In some embodiments, the secondary battery may be assembled into a battery module, and the battery module may include one or more secondary batteries. The specific quantity may be chosen by persons skilled in the art according to use and capacity of the battery module.

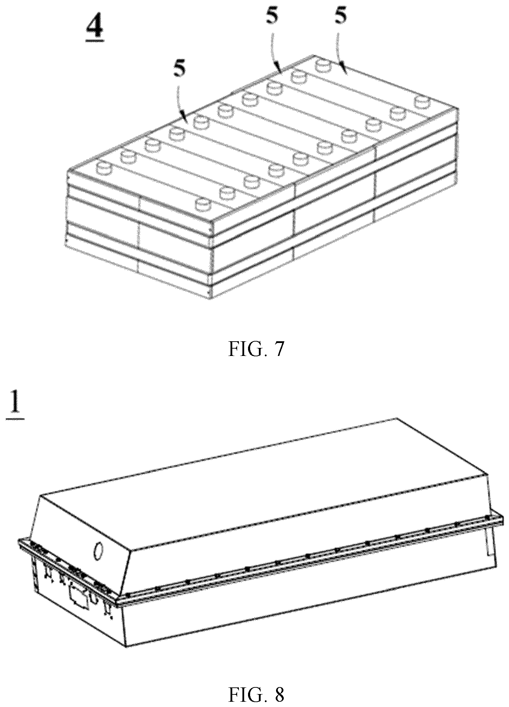

FIG. 7 shows a battery module 4 as an example. Referring to FIG. 7, in the battery module 4, a plurality of secondary batteries 5 may be sequentially arranged in a length direction of the battery module 4. Certainly, the batteries may alternatively be arranged in any other manners. Further, the plurality of secondary batteries 5 may be fixed by fasteners.
Optionally, the battery module 4 may further include a shell with an accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

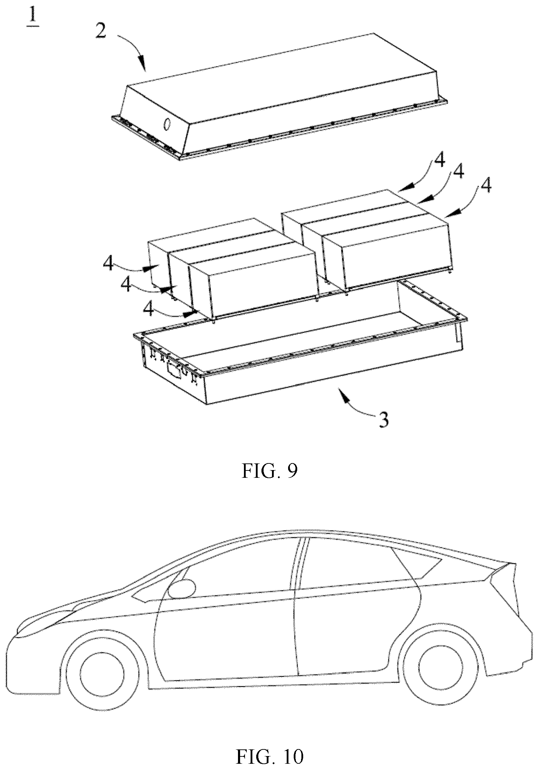

FIG. 8 and FIG. 9 show a battery pack 1 as an example. Referring to FIG. 8 and FIG. 9, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source of the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 10 shows an electric apparatus as an example. This electric apparatus is a battery electric vehicle, a hybrid electric vehicle, a plug-in hybrid electric vehicle, or the like. To satisfy requirements of the electric apparatus for high power and high energy density of the secondary battery, a battery pack or a battery module may be used.

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

Layered metal oxides having the following general formula are prepared in the following examples:

$$Na_xM1_aM2_bMn_{1-a-b}O_{2-z}F_z,$$

where

> M1 is selected from one or more of alkali metal elements other than Na and alkaline earth metal elements; and
> M2 is selected from one or more of transition metal elements other than Mn.

Example 1

Target general formula: $Na_{0.75}Ni_{0.25}Mn_{0.75}O_{1.95}F_{0.05}$

According to the stoichiometric ratio of the target general formula, raw materials of 15.55 g of $Na_2CO_3$ (with a purity of 99%), 7.306 g of NiO (with a purity of 99%), 0.82 g of NaF (with a purity of 98%), and 23.16 g of $Mn_2O_3$ (with a purity of 98%) were mixed in an agate jar of a planetary ball mill, and the raw materials were fully ground at a rotation speed of 400 r/min. The result powder was heated in a muffle furnace to 850°C at a temperature rise rate of 3°C/min, and then calcined at this temperature for 24 h and then naturally cooled to room temperature, to obtain a black P2-type layered metal oxide, namely, the $Na_{0.75}Ni_{0.25}Mn_{0.75}O_{1.95}F_{0.05}$ material.

Examples 2 to 12

Examples 2 to 12 differed from Example 1 in the target general formula of the layered metal oxide. For details of the specific difference, refer to Table 1.

Examples 12 to 14

The following electrode active material was prepared in Examples 12 to 14. The electrode active material includes:

> a core, where the core includes the layered metal oxide; and
> a shell, where the shell covers at least a portion of surface of the core, the shell includes a first element A, and the first element A is selected from Ti, Al, Mg, Co, or a combination thereof; and

the electrode active material has the following general formula:

$$Na_xM1_aM2_bMn_{1-a-b}O_{2-z}F_z \cdot A_n,$$

where

M1 is selected from one or more of alkali metal elements other than Na and alkaline earth metal elements; and M2 is selected from one or more of transition metal elements other than Mn.

Example 12

Target general formula: $Na_{0.75}Ni_{0.25}Mn_{0.75}O_{1.95}F_{0.05} \cdot Mg_{0.01}$

Example 12 differed from Example 1 in that after the material is composited, this product and the nanoscale MgO powder were ball-milled and mixed at a molar ratio of 100:1 and then subjected to secondary calcining at a temperature range of 400°C-600°C for 4 h-10 h to obtain the final product.

Examples 13 and 14

Examples 13 and 14 differed from Example 12 in that the target general formula of the layered metal oxide varied with the coating amount of MgO, and Examples 13 and 14 were the same as Example 12 in other production methods except for the different coating amounts.

Comparative Examples 1A and 1B and Comparative Examples 2 to 7

Comparative Examples 1A and 1B and Comparative Examples 2 to 7 differed from Example 1 in the target general formula of the layered metal oxide. For details of the specific difference, refer to Table 1.

Preparation of secondary battery

Preparation of positive electrode plate: Positive electrode active material, conductive agent carbon black, binder polyvinylidene fluoride (PVDF), and N-methylpyrrolidone (NMP) were stirred and mixed at a mass ratio of 80:15:5 to obtain a uniform positive electrode slurry; and then the positive electrode slurry was evenly applied onto a positive electrode current collector aluminum foil, followed by drying, cold pressing, and splitting, to obtain a positive electrode plate. The positive electrode active material was the P2-type layered metal oxide prepared in the foregoing examples and comparative examples.

Preparation of negative electrode plate: The negative electrode plate was a thin active metal sodium plate with a diameter of 16 mm.

Preparation of electrolyte: In an argon atmosphere glove box ($H_2O$ < 0.1 ppm, and $O_2$ < 0.1 ppm), organic solvents diethyl carbonate (DEC) and ethylene carbonate (EC) were fully mixed at a volume ratio of 1:1, then a proper amount of $NaPF_6$ was added for full dissolving, and the mixture was stirred to obtain a uniform $NaPF_6$ solution with a concentration of 1 mol/L, namely, the electrolyte in Example 1.

Separator: Glass fiber was used as the separator.

Battery assembly: In the glove box, nickel foam, the negative electrode Na plate, the separator, and the positive electrode plate were sequentially placed into a button battery housing, then the electrolyte was added dropwise into the battery housing, and finally the battery housing was sealed, to obtain a button battery.

Analysis and test

1. X-ray diffraction analysis

The fresh prepared layered metal oxide was soaked in deionized water for 24 hours to obtain a washed layered metal oxide.

X-ray diffraction analysis was performed on the fresh prepared layered metal oxide and the washed layered metal oxide to obtain XRD patterns, and intensities corresponding to (002) crystal plane characteristic peaks were collected and calculated as $I/I_0 \geq 0.8$; where

I was an intensity corresponding to the (002) crystal plane characteristic peak of the fresh prepared layered metal oxide; and

$I_0$ was an intensity corresponding to the (002) crystal plane characteristic peak of the washed layered metal oxide.

Test method of XRD pattern: using a Bruker D8 Discover X-ray powder diffractometer from Bruker AxS of Germany. Parameters of the X-ray diffraction analysis were as follows: median particle size of a powder sample: 9 $\mu$m; radiation source: CuK ray; scanning mode: step scanning; scanning condition: 0.016358°/step; and entrance slit: 2.5 mm, anti-scatter slit: 18 mm, and receiving slit: 0.30 mm. After the XRD diffraction pattern was obtained, the position of the (002) crystal plane characteristic peak was determined and its peak height was measured, which was the intensity corresponding to the (002) crystal plane characteristic peak.

2. Scanning electron microscope analysis

A scanning electron microscope was used to analyze the layered metal oxide in Example 1.

3. Battery analysis

3.1 Discharge specific capacity analysis

Specific capacity test at 2 V-4.5 V: At 25°C, the battery was charged to 4.5 V at a constant current of 0.1C, left standing for 5 min, and then discharged to 2 V at 0.1C. The resulting capacity was recorded as specific capacity at 2 V-4.5 V

Specific capacity test at 1.5 V-4.3 V: At 25°C, the battery was charged to 4.3 V at a constant current of 0.1C, left standing for 5 min, and then discharged to 1.5 V at 0.1C. The resulting capacity was recorded as specific capacity at 1.5 V-4.3 V

3.2 Cycle specific capacity analysis

At 25°C, the battery was charged to 4.5 V at a constant current of 0.1C, left standing for 5 min, and then discharged to 2 V at 0.1C. The resulting capacity was recorded as initial capacity $C_0$. Then, the same battery was charged to 4.5 V at a constant current of 1C, left standing for 5 min, and then discharged to 2 V at a constant current of 1C. The resulting capacity was recorded as initial capacity $C_1$. Then, the same battery was charged and discharged at a constant current of 1C with the same steps repeated, and discharge capacity $C_{50}$ after the 50th charge and discharge cycle at a constant current of 1C was recorded.

$$\text{Capacity retention rate after 50th cycle} = C_{50}/C_1$$

3.3 Discharge mid-voltage

At 25°C, the battery was charged to 4.5 V at a constant current of 0.1C, left standing for 5 min, and then discharged to 2 V at 0.1C. The resulting discharge mid-voltage was recorded as discharge mid-voltage at 2 V-4.5 V

3.4 Average discharge voltage

At 25°C, the battery was charged to 4.5 V at a constant current of 0.1C, left standing for 5 min, and then discharged to 2 V at 0.1C. A ratio of the resulting discharge specific energy at 2 V-4.5 V to the discharge specific capacity at 2 V-4.5 V was recorded as the average discharge voltage.

For details of the results of the foregoing tests, refer to Table 1.

Table 1

| | Design composition | x | a | b | z/(1 - a - b) | $I/I_0$ before and after washing | Specific capacity at 2 V-4.5 V | Specific capacity at 1.5 V-4.3 V | Discharge mid-voltage at 2 V-4.5 V | Average discharge voltage at 2 V-4.5 V | Capacity retention rate after 50th cycle |
|---|---|---|---|---|---|---|---|---|---|---|---|
| Example 1 | $Na_{0.75}Ni_{0.25}Mn_{0.75}O_{1.95}F_{0.05}$ | 0.75 | 0 | 0.25 | 0.07 | 0.91 | 145 | 174 | 3.63 | 3.54 | 83.72% |
| Example 2 | $Na_{0.75}Ni_{0.28}Mn_{0.72}O_{1.96}F_{0.04}$ | 0.75 | 0 | 0.28 | 0.06 | 0.89 | 156 | 183 | 3.61 | 3.52 | 80.12% |
| Example 3 | $Na_{0.75}Ni_{0.25}Mn_{0.75}O_{1.9}F_{0.1}$ | 0.75 | 0 | 0.25 | 0.13 | 0.95 | 142 | 180 | 3.62 | 3.53 | 83.91% |
| Example 4 | $Na_{0.6}Ni_{0.25}Mn_{0.75}O_{1.95}F_{0.05}$ | 0.6 | 0 | 0.25 | 0.07 | 0.90 | 128 | 188 | / | / | 78.32% |
| Example 5 | $Na_{0.85}Ni_{0.25}Mn_{0.75}O_{1.95}F_{0.05}$ | 0.85 | 0 | 0.25 | 0.07 | 0.92 | 135 | 167 | 3.63 | 3.50 | 79.90% |
| Example 6 | $Na_{0.75}Mg_{0.25}Mn_{0.75}O_{1.95}F_{0.05}$ | 0.75 | 0.25 | 0 | 0.07 | 0.95 | 154 | 175 | 2.79 | 2.76 | 90.10% |
| Example 7 | $Na_{0.75}Li_{0.05}Ni_{0.2}Mn_{0.75}O_{1.95}F_{0.05}$ | 0.75 | 0.05 | 0.2 | 0.07 | 0.91 | 135 | 152 | 3.45 | 3.31 | 80.64% |
| Example 8 | $Na_{0.8}Mg_{0.05}Ni_{0.2}Mn_{0.75}O_{2-n}F_{0.05}$ | 0.8 | 0.05 | 0.2 | 0.07 | 0.92 | 127 | 149 | 3.56 | 3.42 | 90.33% |
| Example 9 | $Na_{0.8}Zn_{0.05}Ni_{0.2}Mn_{0.75}O_{1.95}F_{0.05}$ | 0.8 | 0.05 | 0.2 | 0.07 | 0.95 | 131 | 161 | 3.57 | 3.42 | 95.16% |
| Example 10 | $Na_{0.8}Fe_{0.05}Ni_{0.2}Mn_{0.75}O_{1.95}F_{0.05}$ | 0.8 | 0 | 0.25 | 0.07 | 0.92 | 126 | 171 | 3.55 | 3.39 | 78.46% |
| Example 11 | $Na_{0.8}Mg_{0.03}Fe_{0.1}Ni_{0.2}Mn_{0.67}O_{1.95}F_{0.05}$ | 0.8 | 0.03 | 0.3 | 0.07 | 0.91 | 112 | 149 | 3.63 | 3.46 | 95.69% |

(continued)

| | Design composition | x | a | b | z/(1 - a - b) | I/I$_0$ before and after washing | Specific capacity at 2 V-4.5 V | Specific capacity at 1.5 V-4.3 V | Discharge mid-voltage at 2 V-4.5 V | Average discharge voltage at 2 V-4.5 V | Capacity retention rate after 50th cycle |
|---|---|---|---|---|---|---|---|---|---|---|---|
| Example 12 | $Na_{0.75}Ni_{0.25}Mn_{0.75}O_{1.95}F_{0.05} \cdot Mg_{0.01}$ | 0.75 | 0 | 0.25 | 0.07 | 0.92 | 140 | 173 | / | / | 89.12% |
| Example 13 | $Na_{0.75}Ni_{0.25}Mn_{0.75}O_{1.9}F_{0.1} \cdot Mg_{0.006}$ | 0.75 | 0 | 0.25 | 0.13 | 0.90 | 145 | 178 | / | / | 87.80% |
| Example 14 | $Na_{0.75}Ni_{0.25}Mn_{0.75}O_{1.96}F_{0.04} \cdot Mg_{0.015}$ | 0.75 | 0 | 0.25 | 0.05 | 0.95 | 139 | 171 | / | / | 88.34% |
| Comparative Example 1A | $Na_{0.75}Ni_{0.25}Mn_{0.75}O_2$ | 0.75 | 0 | 0.25 | 0.00 | 0.78 | 109 | 165 | 3.41 | 3.30 | 64.90% |
| Comparative Example 1B | $Na_{0.85}Ni_{0.25}Mn_{0.75}O_2$ | 0.85 | 0 | 0.25 | 0.00 | 0.75 | 141 | 170 | 3.60 | 3.52 | 65.60% |
| Comparative Example 2 | $NaNi_{0.25}Mn_{0.75}O_{1.95}F_{0.05}$ | 1 | 0 | 0.25 | 0.07 | 0.8 | 138 | 168 | 3.54 | 3.48 | 51.56% |
| Comparative Example 3 | $Na_{0.75}Li_{0.25}Mn_{0.75}O_2$ | 0.75 | 0.25 | 0 | 0.00 | 0.76 | 162 | 157 | 2.90 | 2.89 | 50.06% |
| Comparative Example 4 | $Na_{0.8}Fe_{0.05}Ni_{0.2}Mn_{0.75}O_2$ | 0.8 | 0 | 0.25 | 0.00 | 0.73 | 137 | 152 | 3.54 | 3.38 | 70.14% |
| Comparative Example 5 | $Na_{0.8}Mg_{0.05}Ni_{0.2}Mn_{0.75}O_2$ | 0.8 | 0.05 | 0.2 | 0.00 | 0.65 | 132 | 147 | 3.53 | 3.41 | 80.57% |
| Comparative Example 6 | $Na_{0.8}Fe_{0.45}Ni_{0.2}Mn_{0.35}O_{1.95}F_{0.05}$ | 0.8 | 0 | 0.65 | 0.14 | 0.58 | 155 | 167 | / | / | 65.90% |
| Comparative Example 7 | $Na_{0.6}Ni_{0.05}Mn_{0.95}O_{1.95}F_{0.05}$ | 0.6 | 0 | 0.05 | 0.05 | 0.49 | 136 | 145 | 2.78 | 2.88 | 77.23% |

Results and discussion

1. Phase analysis

The ratios ($I/I_0$) of the 002 characteristic peaks of the layered metal oxides before and after washing in the examples are within the range of 0.85-1.1. The ratios ($I/I_0$) of the 002 characteristic peaks of the layered metal oxides before and after washing in the comparative examples are within the range of 0.5-0.8. The layered metal oxides in the examples represent more excellent phase structure stability.

(a), (b), and (c) of FIG. 1 show XRD patterns of the fresh prepared layered metal oxide and the washed layered metal oxide in Example 1 and a standard phase card (00-054-0894). As shown in the figures, the characteristic peaks in the XRD before and after washing in Example 1 all coincide with multiple characteristic peaks at positions such as 002, 004, 100, 101, and 012 in the standard XRD pattern, showing a single P2 phase. In addition, the peak intensity of the characteristic peak in the XRD before and after washing remains almost unchanged, for example, the peak 002 around 15°.

(a), (b), and (c) of FIG. 2 show XRD patterns of the fresh prepared layered metal oxide and the washed layered metal oxide in Comparative Example 1A. As shown in the figures, the characteristic peaks in the XRD before washing in Example 1 all coincide with multiple characteristic peaks at positions such as 002, 004, 100, 101, and 012 in the standard XRD pattern, while the impurity peaks with very low intensity appear around 20° and 40°, where the impurity peak at 40° is a impurity peak of NiO. In addition to the characteristic peaks of the P2 phase and the weak impurity peaks of NiO before washing, new other strong impurity peaks appear around 12° and 25° after washing, which are not the characteristic peaks of the P2 phase. This indicates that part of the structure of the material undergo side reactions after washing, making the washing process unstable.

2. Morphology analysis

(a) and (b) of FIG. 3 show scanning electron microscope images of the layered metal oxide in Example 1 at different magnifications respectively. As shown in the figures, the morphology of the layered metal oxide in Example 1 is irregular hexagonal prisms with smooth edge lines, which unevenly agglomerate together, with a median particle size within the range of 3 $\mu$m-15 $\mu$m.

3. Battery performance analysis

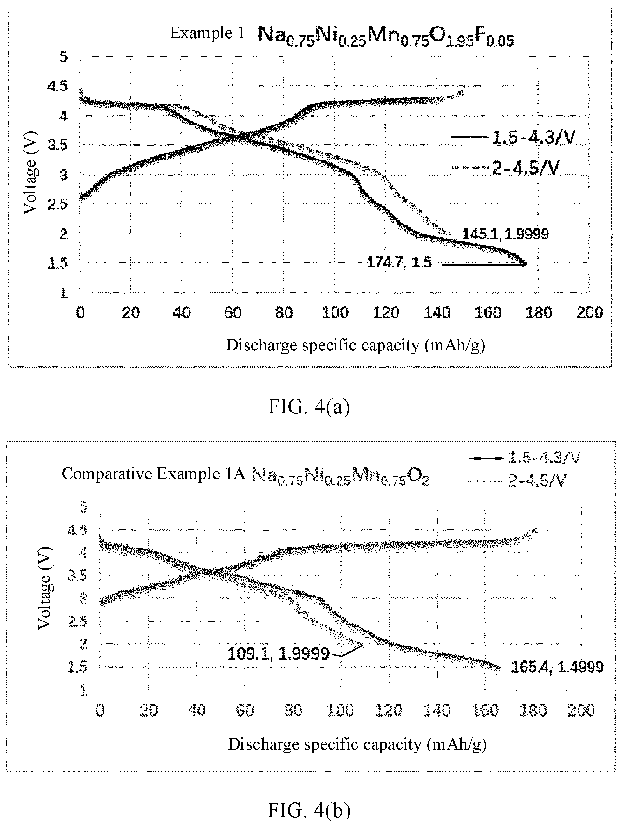

In FIG. 4, (a) shows discharge specific capacity curves of the layered metal oxide at 2 V-4.5 V and 1.5 V-4.3 V in Example 1; and (b) shows discharge specific capacity curves of the layered metal oxide at 2 V-4.5 V and 1.5 V-4.3 V in Comparative Example 1A.

The specific capacities of the layered metal oxide at 2 V-4.5 V and 1.5 V-4.3 V in Example 1 are 145 mAh/g and 175 mAh/g respectively, and the specific capacities of the layered metal oxide in Comparative Example 1A are 109 mAh/g and 165 mAh/g. The layered metal oxide in Example 1 represents higher capacities with in both voltage ranges.

The cycling retention rate of the layered metal oxide in Example 1 is 83.72% at the 50th cycle, and the cycling retention rate of the layered metal oxide in Comparative Example 1A is 64.9% at the 50th cycle. The layered metal oxide in the example represents higher cycling retention rate.

The average discharge mid-voltage of the layered metal oxide in Example 1 is 3.63 V (average discharge voltage: 3.54 V), and the average discharge mid-voltage of the layered metal oxide in Comparative Example 1A is 3.41 V (average discharge voltage: 3.30 V). The layered metal oxide in the example represents higher average discharge voltage.

It can be learned from Examples 1 to 3 that when the value of z/(1 - a - b) is within the range of 0.06-0.13, the layered metal oxide material represents enhanced stability, higher specific capacity, higher average discharge mid-voltage, and increased cycling retention rate.

It can be learned from Examples 4 and 5 that when the value of x is within the range of 0.6-0.85, the layered metal oxide material represents enhanced stability, higher specific capacity, higher average discharge mid-voltage, and increased cycling retention rate.

It can be learned from Examples 6 to 11 that M1 can be selected from one or more of alkali metal elements (for example, Li) and alkaline earth metal elements (for example, Mg) and M2 can be selected from one or more of transition metal elements (for example, Ni, Zn, and Fe), so the layered metal oxide material represents enhanced stability, higher specific capacity, higher average discharge mid-voltage, and increased cycling retention rate.

It can be learned from Examples 12 to 14 that with the MgO coating layer provided on the surface of the layered metal oxide material (with a coating amount being a molar proportion of 0.6%-1.5% of the layered metal oxide material), the coated layered metal oxide material represents enhanced stability, higher specific capacity, higher average discharge mid-voltage, and increased cycling retention rate.

It can be learned from Comparative Example 1A, Comparative Example 1B, and Comparative Examples 3 to 5 that the layered metal oxide not doped with element F does not represent the foregoing improved performance.

It can be learned from Comparative Example 2 that when the content of Na (that is, the value of x) reaches 1, the layered metal oxide does not represent the foregoing improved performance.

It can be learned from Comparative Examples 6 and 7 that when the value of z/(1 - a- b) is 0.14 and 0.05, the layered metal oxide does not represent the foregoing improved performance.

In conclusion, without being bound by any theory, when the value of z/(1 - a - b) is within the range of 0.06-0.13, there is mutual synergy between element Mn and element F in the material, and an appropriate proportion of F/Mn doping can disrupt the cationic ordered structure formed by M1 and M2 metals and $Mn^{4+}$, which can stabilize valence change of Mn at low voltage, such that valence changes of active transition metals such as Fe and Ni at higher voltage are clearly distinguished from the valence change of Mn at low voltage during charging. In addition, this can increase the discharge mid-voltage and capacity while suppressing complex two-phase transition in the low-voltage region, making it possible to solve the problem of poor cycling caused by the Jahn-Teller effect of the valence change of Mn at low voltage by shortening the voltage window of the material, improving the cycling performance of the material and increasing the energy density of the material. Moreover, addition of element F can significantly alleviate the problem of poor stability in aqueous and atmospheric environments caused by the simple Me-O configuration of the layered oxide, and alleviate a series of common problems such as mixing process and storage related thereto.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

**Claims**

1. An electrode active material, comprising a layered metal oxide, wherein the layered metal oxide has the following general formula:

$$Na_xM1_aM2_bMn_{1-a-b}O_{2-z}F_z,$$

wherein $0.55 \leq x \leq 0.85$, $a \geq 0$, $b \geq 0$, $0.1 \leq a + b \leq 0.33$, and $0.06 \leq z/(1 - a - b) \leq 0.13$;
M1 is selected from one or more of alkali metal elements other than Na and alkaline earth metal elements; and
M2 is selected from one or more of transition metal elements other than Mn.

2. The electrode active material according to claim 1, wherein the layered metal oxide is a P2-type layered metal oxide.

3. The electrode active material according to claim 1 or 2, having one or more of the following characteristics:

   - the alkali metal element is selected from Li, K, or a combination thereof;
   - the alkaline earth metal element is selected from Be, Mg, Ca, Sr, Ba, or a combination thereof; and
   - the transition metal element is selected from Ni, Fe, Ti, Cr, Co, Cu, Zn, or a combination thereof.

4. The electrode active material according to any one of claims 1 to 3, having one or more of the following characteristics:

   - the alkali metal element is Li;
   - the alkaline earth metal element is Mg; and
   - the transition metal element is selected from Ni, Fe, Zn, or a combination thereof.

5. The electrode active material according to any one of claims 1 to 4, having one or more of the following characteristics:

$$(1)\ 0.65 \leq x \leq 0.75;$$

and

$$(2)\ 0.06 \leq z/(1 - a - b) \leq 0.08.$$

6. The electrode active material according to any one of claims 1 to 5, wherein $0.25 \leq (a + b)/(1 - a - b) < 0.43$.

7. The electrode active material according to any one of claims 1 to 6, wherein in an X-ray diffraction pattern of the layered metal oxide, an intensity corresponding to a (002) crystal plane characteristic peak satisfies the following relation:

$$I/I_0 \geq 0.8;$$

wherein

$I_0$ is an intensity corresponding to a (002) crystal plane characteristic peak of a layered metal oxide not soaked in water; and
I is an intensity corresponding to a (002) crystal plane characteristic peak of a layered metal oxide soaked in water for 24 hours.

8. The electrode active material according to any one of claims 1 to 7, comprising:

a core, wherein the core comprises the layered metal oxide; and
a shell, wherein the shell covers at least a portion of surface of the core, the shell comprises a first element A, and the first element A is selected from Ti, Al, Mg, Co, or a combination thereof; and
the electrode active material has the following general formula:

$$Na_xM1_aM2_bMn_{1-a-b}O_{2-z}F_z{\cdot}A_n,$$

wherein n > 0.

9. The electrode active material according to claim 8, wherein the electrode active material satisfies the following relation:

$$0 < n \leq 0.0006/z.$$

10. A secondary battery, comprising a positive electrode, wherein the positive electrode comprises the electrode active material according to any one of claims 1 to 9.

11. An electric apparatus, comprising the secondary battery according to claim 10.

FIG. 1

FIG. 2

FIG. 3(a)

FIG. 3(b)

Example 1 $Na_{0.75}Ni_{0.25}Mn_{0.75}O_{1.95}F_{0.05}$

FIG. 4(a)

Comparative Example 1A $Na_{0.75}Ni_{0.25}Mn_{0.75}O_2$

FIG. 4(b)

<u>5</u>

FIG. 5

<u>5</u>

FIG. 6

FIG. 7

FIG. 8

FIG. 9

FIG. 10

<div align="center">**INTERNATIONAL SEARCH REPORT**</div>

| | International application No. |
|---|---|
| | **PCT/CN2022/101168** |

| A. | CLASSIFICATION OF SUBJECT MATTER |
|---|---|
| | H01M4/505(2010.01)i |

According to International Patent Classification (IPC) or to both national classification and IPC

| B. | FIELDS SEARCHED |
|---|---|

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, CNKI, STN: 正极活性材料, 钠, 氟, 锰, 包覆, 壳, positive electrode active material, sodium, fluorine, manganese, coat, shell

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113517433 A (TIANJIN UNIVERSITY OF TECHNOLOGY) 19 October 2021 (2021-10-19)<br>description, paragraphs 5-35 and 44-45 | 1-7, 10-11 |
| Y | CN 113517433 A (TIANJIN UNIVERSITY OF TECHNOLOGY) 19 October 2021 (2021-10-19)<br>description, paragraphs 5-35 and 44-45 | 8-9 |
| Y | CN 113889613 A (CENTRAL SOUTH UNIVERSITY) 04 January 2022 (2022-01-04)<br>description, paragraphs 4-20 | 8-9, |
| A | WO 2021057457 A1 (CONTEMPORARY AMPEREX TECHNOLOGY CO., LTD.) 01 April 2021 (2021-04-01)<br>entire document | 1-11 |
| A | CN 111554919 A (CONTEMPORARY AMPEREX TECHNOLOGY CO., LTD.) 18 August 2020 (2020-08-18)<br>entire document | 1-11 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 February 2023** | **01 March 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2022/101168**

**C.     DOCUMENTS CONSIDERED TO BE RELEVANT**

| Category* | Citation of document, with indication, where appropriate, of the relevant passages | Relevant to claim No. |
|---|---|---|
| X | LIU, Kai et al. "Insights into the Enhanced Cycle and Rate Performances of the F-Substituted P2-Type Oxide Cathodes for Sodium-Ion Batteries" *ADVANCED ENERGY MATERIALS*, Vol. 10, No. 19, 19 May 2020 (2020-05-19), ISSN: 1614-6832, article, page 2, right-hand column, paragraph 1 to page 3, left-hand column, paragraph 1, and figure 1 | 1-7, 10-11 |
| Y | LIU, Kai et al. "Insights into the Enhanced Cycle and Rate Performances of the F-Substituted P2-Type Oxide Cathodes for Sodium-Ion Batteries" *ADVANCED ENERGY MATERIALS*, Vol. 10, No. 19, 19 May 2020 (2020-05-19), ISSN: 1614-6832, article, page 2, right-hand column, paragraph 1 to page 3, left-hand column, paragraph 1, and figure 1 | 8-9 |

Form PCT/ISA/210 (second sheet) (July 2022)

**INTERNATIONAL SEARCH REPORT**
Information on patent family members

International application No.

**PCT/CN2022/101168**

| Patent document cited in search report | | | Publication date (day/month/year) | Patent family member(s) | | | Publication date (day/month/year) |
|---|---|---|---|---|---|---|---|
| CN | 113517433 | A | 19 October 2021 | None | | | |
| CN | 113889613 | A | 04 January 2022 | None | | | |
| WO | 2021057457 | A1 | 01 April 2021 | EP | 3972016 | A1 | 23 March 2022 |
| | | | | US | 2022123299 | A1 | 21 April 2022 |
| CN | 111554919 | A | 18 August 2020 | WO | 2020164364 | A1 | 20 August 2022 |
| | | | | EP | 3907795 | A1 | 10 November 2021 |
| | | | | US | 2022037660 | A1 | 03 February 2022 |
| | | | | CN | 111554919 | B | 22 April 2022 |

Form PCT/ISA/210 (patent family annex) (July 2022)